# EUROPEAN PATENT APPLICATION

(11) **EP 4 462 870 A1**
(43) Date of publication of application: **13.11.2024**
(21) Application number: 24163270.2
(22) Date of filing: 13.03.2024
(51) Int. Cl.: H04W 36/00, H04W 74/0808, H04W 56/00

(54) **COLLISION DETECTION FOR TIMING ADVANCE ACQUISITION IN A MOBILE NETWORK**

(30) Priority: 11.05.2023 FI 20235535
(71) Applicant: Nokia Technologies Oy, 02610 Espoo (FI)
(72) Inventor: KARABULUT, Umur, 81379 Munich (DE); SPAPIS, Panagiotis, 81475 Munich (DE); KAKKAVAS, Anastasios, 80331 Munich (DE); GÜRSU, Halit Murat, 81379 Munich (DE); PALKA, Dariusz, 30-348 Krakow (PL)
(74) Representative: Bryers Intellectual Property Ltd

(57) **Abstract**

In accordance with an example embodiment of the present disclosure an apparatus that is caused to receive, at a central unit, CU, a first indication of a random access, RA, attempt associated with a first user equipment, the first indication comprising a RA preamble ID, RAPID; a RA radio network temporary identifier, RA-RNTI; and an identifier of a target cell; to start a collision detection timer responsive to receiving the first indication; and to determine a preamble collision related to timing advance, TA, acquisition in a Layer1/Layer2 triggered mobility procedure, responsive to receiving, at the CU, during the collision detection timer is running, a second indication of an RA attempt associated with a second user equipment, the second indication comprising the same RAPID, RA-RNTI and identifier of the target cell as the first indication.

## Description

### TECHNICAL FIELD

Various example embodiments relate to collision detection for timing advance acquisition in a mobile network.

### BACKGROUND

This section illustrates useful background information without admission of any technique described herein representative of the state of the art.

Mobility (i.e. allowing a user equipment to move from one serving cell to another one) is one important aspect of mobile networks.

Present disclosure relates to development of mobility procedures of mobile networks and development of collision detection for timing advance acquisition of the mobility procedures.

### SUMMARY

The scope of protection sought for various embodiments of present disclosure is set out by the independent claims. The embodiments and features, if any, described in this specification that do not fall under the scope of the independent claims are to be interpreted as examples useful for understanding various example embodiments.

According to a first example aspect of the present disclosure, there is provided an apparatus comprising:
at least one processor; and
at least one memory including executable instructions that, when executed by the at least one processor, cause the apparatus
   to receive a first indication of a random access, RA, attempt associated with a first user equipment, the first indication comprising a RA preamble ID, RAPID; a RA radio network temporary identifier, RA-RNTI; and an identifier of a target cell;
   to start a collision detection timer responsive to receiving the first indication; and
   to determine a preamble collision related to timing advance, TA, acquisition in a Layer1/Layer2 triggered mobility, LTM, procedure, responsive to receiving during the collision detection timer is running, a second indication of an RA attempt associated with a second user equipment, the second indication comprising the same RAPID, RA-RNTI and identifier of the target cell as the first indication.

In some example embodiments, the first indication and the second indication further comprise the same system frame number, SFN.

In some example embodiments, the apparatus of the first aspect is caused to trigger RA retransmission by at least one of the first user equipment and the second user equipment responsive to determining the preamble collision.

In some example embodiments, the apparatus of the first aspect is caused to indicate a RA back-off for a given number of RA occasions in connection with triggering the RA retransmission.

In some example embodiments, the apparatus of the first aspect is caused to omit forwarding a msg2 of contention based random access, CBRA, procedure responsive to determining the preamble collision
In some example embodiments, the collision detection timer is specific for the respective combination of RAPID, RA-RNTI, and identifier of the target cell, and optionally SFN.

In some example embodiments, the apparatus of the first aspect is caused to determine no preamble collision, responsive to not receiving during the collision detection timer is running, the second indication of an RA attempt comprising the same RAPID, RA-RNTI and identifier of the target cell, and optionally SFN as the first indication.

In some example embodiments, the apparatus of the first aspect is caused to forward, to a source distributed unit, DU, serving the user equipment associated with the first indication, a msg2 of the CBRA procedure responsive to determining no preamble collision.

In some example embodiments, the apparatus of the first aspect is caused to send an indication of no collision, to a source distributed unit, DU, serving the user equipment associated with the first indication, responsive to determining no preamble collision.

In some example embodiments, the collision detection timer is shorter than a RA timer running in a user equipment or in a source DU.

In some example embodiments, at least the first indication or the second indication is an indication of a RA attempt related to other purposes than TA acquisition in the LTM procedure.

In some example embodiments, the apparatus of the first aspect is a central unit, CU.

According to a second example aspect of the present disclosure, there is provided an apparatus comprising
at least one processor; and
at least one memory including executable instructions that, when executed by the at least one processor, cause the apparatus
   to receive a msg1 of contention based random access, CBRA, procedure from a user equipment; and
   to determine that the CBRA procedure is related to other purposes than timing advance, TA, acquisition in a Layer1/Layer2 triggered mobility, LTM, procedure responsive to determining a transmission of a msg3 of the CBRA procedure; or to determine that the CBRA procedure is related to TA acquisition in the LTM procedure responsive to determining no transmission of the msg3 of the CBRA procedure.

In some example embodiments, the apparatus of the second aspect is caused to send, to a central unit, CU, an indication of a RA attempt related to other purposes than TA acquisition in the LTM procedure responsive to determining that the CBRA procedure is related to other purposes than TA acquisition in the LTM procedure

In some example embodiments, the apparatus of the second aspect is caused to send, to the central unit, CU, a msg2 of the CBRA procedure responsive to determining that the CBRA procedure is related to TA acquisition in the LTM procedure.

In some example embodiments, the apparatus of the second aspect is caused to omit sending, to the central unit, CU, a msg2 of the CBRA procedure responsive to determining that the CBRA procedure is related to other purposes than TA acquisition.

In some example embodiments, the apparatus of the second aspect is caused to omit sending, to the central unit, CU, an indication of a RA attempt related to other purposes than TA acquisition and a msg2 of the CBRA procedure responsive to determining that the CBRA procedure is related to other purposes than TA acquisition.

In some example embodiments, the apparatus of the second aspect is a target distributed unit, DU.

According to a third example aspect of the present disclosure, there is provided an apparatus comprising
at least one processor; and
at least one memory including executable instructions that, when executed by the at least one processor, cause the apparatus
   to determine validity of a timing advance, TA, acquired for a user equipment in a Layer1/Layer2 triggered mobility procedure, wherein
   the apparatus is caused to perform one of the following: receive a no collision indication from a central unit, CU, and to responsively determine that the TA is valid, or receive a RA retransmission trigger, from the CU, and to responsively determine that the TA is not valid.

In some example embodiments, the apparatus of the third aspect is a source distributed unit, DU.

According to a fourth example aspect of the present disclosure, there is provided a method, comprising:
receiving, at a central unit, CU, a first indication of a random access, RA, attempt associated with a first user equipment, the first indication comprising a RA preamble ID, RAPID; a RA radio network temporary identifier, RA-RNTI; and an identifier of a target cell;
starting a collision detection timer responsive to receiving the first indication; and
determining a preamble collision related to timing advance, TA, acquisition in a Layer1/Layer2 triggered mobility procedure, responsive to receiving, at the CU, during the collision detection timer is running, a second indication of an RA attempt associated with a second user equipment, the second indication comprising the same RAPID, RA-RNTI and identifier of the target cell as the first indication.

According to a fifth example aspect of the present disclosure, there is provided a computer program comprising instructions for performing at least the following:
receiving, at a central unit, CU, a first indication of a random access, RA, attempt associated with a first user equipment, the first indication comprising a RA preamble ID, RAPID; a RA radio network temporary identifier, RA-RNTI; and an identifier of a target cell;
starting a collision detection timer responsive to receiving the first indication; and
determining a preamble collision related to timing advance, TA, acquisition in a Layer1/Layer2 triggered mobility procedure, responsive to receiving, at the CU, during the collision detection timer is running, a second indication of an RA attempt associated with a second user equipment, the second indication comprising the same RAPID, RA-RNTI and identifier of the target cell as the first indication.

The method and the computer program of the fourth and the fifth aspects may further comprise the features discussed in connection with the first aspect.

According to a sixth example aspect of the present disclosure, there is provided a method, comprising:
receiving a msg1 of contention based random access, CBRA, procedure from a user equipment; and
determining that the CBRA procedure is related to other purposes than timing advance, TA, acquisition in a Layer1/Layer2 triggered mobility, LTM, procedure responsive to determining a transmission of a msg3 of the CBRA procedure; or
determining that the CBRA procedure is related to TA acquisition in the LTM procedure responsive to determining no transmission of the msg3 of the CBRA procedure.

According to a seventh example aspect of the present disclosure, there is provided a computer program comprising instructions for performing at least the following:
receiving a msg1 of contention based random access, CBRA, procedure from a user equipment; and
determining that the CBRA procedure is related to other purposes than timing advance, TA, acquisition in a Layer1/Layer2 triggered mobility, LTM, procedure responsive to determining a transmission of a msg3 of the CBRA procedure; or determining that the CBRA procedure is related to TA acquisition in the LTM procedure responsive to determining no transmission of the msg3 of the CBRA procedure.

The method and the computer program of the sixth and the seventh aspects may further comprise the features discussed in connection with the second aspect.

According to an eighth example aspect of the present disclosure, there is provided a method, comprising:
determining validity of a timing advance, TA, acquired for a user equipment in a Layer1/Layer2 triggered mobility procedure; and one of the following:
receiving a no collision indication from a central unit, CU, and responsively determining that the TA is valid, or
receiving a RA retransmission trigger, from the CU, and to responsively determine that the TA is not valid.

According to a ninth example aspect of the present disclosure, there is provided a computer program comprising instructions for performing at least the following:
determining validity of a timing advance, TA, acquired for a user equipment in a Layer1/Layer2 triggered mobility procedure; and one of the following:
receiving a no collision indication from a central unit, CU, and responsively determining that the TA is valid, or
receiving a RA retransmission trigger, from the CU, and to responsively determine that the TA is not valid.

The method and the computer program of the eighth and the ninth aspects may further comprise the features discussed in connection with the third aspect.

According to a tenth example aspect of the present disclosure, there is provided an apparatus comprising:
means for receiving a first indication of a random access, RA, attempt associated with a first user equipment, the first indication comprising a RA preamble ID, RAPID; a RA radio network temporary identifier, RA-RNTI; and an identifier of a target cell;
means for starting a collision detection timer responsive to receiving the first indication; and
means for determining a preamble collision related to timing advance, TA, acquisition in a Layer1/Layer2 triggered mobility procedure, responsive to receiving during the collision detection timer is running, a second indication of an RA attempt associated with a second user equipment, the second indication comprising the same RAPID, RA-RNTI and identifier of the target cell as the first indication.

In some example embodiments, the first indication and the second indication further comprise the same system frame number, SFN.

In some example embodiments, the apparatus of the tenth aspect comprises means for triggering RA retransmission by at least one of the first user equipment and the second user equipment responsive to determining the preamble collision.

In some example embodiments, the apparatus of the first aspect is caused to indicate a RA back-off for a given number of RA occasions in connection with triggering the RA retransmission.

In some example embodiments, the apparatus of the tenth aspect comprises means for omitting forwarding a msg2 of contention based random access, CBRA, procedure responsive to determining the preamble collision

In some example embodiments, the collision detection timer is specific for the respective combination of RAPID, RA-RNTI, and identifier of the target cell, and optionally SFN.

In some example embodiments, the apparatus of the tenth aspect comprises means for determining no preamble collision, responsive to not receiving during the collision detection timer is running, the second indication of an RA attempt comprising the same RAPID, RA-RNTI and identifier of the target cell, and optionally SFN as the first indication.

In some example embodiments, the apparatus of the tenth aspect comprises means for forwarding, to a source distributed unit, DU, serving the user equipment associated with the first indication, a msg2 of the CBRA procedure responsive to determining no preamble collision.

In some example embodiments, the apparatus of the tenth aspect comprises means for sending an indication of no collision, to a source distributed unit, DU, serving the user equipment associated with the first indication, responsive to determining no preamble collision.

In some example embodiments, the collision detection timer is shorter than a RA timer running in a user equipment or in a source DU.

According to an eleventh example aspect of the present disclosure, there is provided an apparatus comprising
means for receiving a msg1 of contention based random access, CBRA, procedure from a user equipment; and
means for determining that the CBRA procedure is related to other purposes than timing advance, TA, acquisition in a Layer1/Layer2 triggered mobility, LTM, procedure responsive to determining a transmission of a msg3 of the CBRA procedure; or determining that the CBRA procedure is related to TA acquisition in the LTM procedure responsive to determining no transmission of the msg3 of the CBRA procedure.

In some example embodiments, the apparatus of the eleventh aspect comprises means for sending, to a central unit, CU, an indication of a RA attempt related to other purposes than TA acquisition in the LTM procedure responsive to determining that the CBRA procedure is related to other purposes than TA acquisition in the LTM procedure

In some example embodiments, the apparatus of the eleventh aspect comprises means for sending, to the central unit, CU, a msg2 of the CBRA procedure responsive to determining that the CBRA procedure is related to TA acquisition in the LTM procedure.

In some example embodiments, the apparatus of the eleventh aspect comprises means for omitting sending, to the central unit, CU, a msg2 of the CBRA procedure responsive to determining that the CBRA procedure is related to other purposes than TA acquisition.

In some example embodiments, the apparatus of the eleventh aspect comprises means for omitting sending, to the central unit, CU, an indication of a RA attempt related to other purposes than TA acquisition and a msg2 of the CBRA procedure responsive to determining that the CBRA procedure is related to other purposes than TA acquisition.

In some example embodiments, the apparatus of the eleventh aspect is a target distributed unit, DU.

According to a twelfth example aspect of the present disclosure, there is provided an apparatus comprising
means for determining validity of a timing advance, TA, acquired for a user equipment in a Layer1/Layer2 triggered mobility procedure; and one of the following:
means for receiving a no collision indication from a central unit, CU, and responsively determining that the TA is valid, or
means for receiving a RA retransmission trigger, from the CU, and to responsively determine that the TA is not valid.

In some example embodiments, the apparatus of the twelwth aspect is a source distributed unit, DU.

The computer program of the fifth, seventh and/or ninth example aspect may be stored in a non-transitory computer readable memory medium. The term non-transitory as used herein is a limitation of the medium itself (i.e. tangible, not a signal) as opposed to a limitation on data storage persistency (e.g. RAM vs. ROM).

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

The various means of the apparatus of the tenth, eleventh and/or twelfth example aspect may comprise a processor; and a memory including executable instructions that, when executed by the processor, cause the performance of the means.

Different non-binding example aspects and embodiments of the present invention have been illustrated in the foregoing. The embodiments in the foregoing are used merely to explain selected aspects or steps that may be utilized in implementations of the embodiment of the present disclosure. Some embodiments may be presented only with reference to certain example aspects. It should be appreciated that corresponding embodiments may apply to other example aspects as well.

### BRIEF DESCRIPTION OF THE DRAWINGS

For a more complete understanding of example embodiments of the present invention, reference is now made, by way of example only, to the following descriptions taken in connection with the accompanying drawings in which:
Figs. 1A-1C show example signaling diagrams of L1/L2 triggered mobility (LTM) procedure;
Fig. 2 shows an example scenario in a mobile network;
Figs. 3-5 are flow diagrams of processes according to example embodiments;
Figs. 6-18 show signaling diagrams of according to some example embodiments; and
Fig. 19 shows a block diagram of apparatuses according to example embodiments.

### DETAILED DESCRIPTION OF THE DRAWINGS

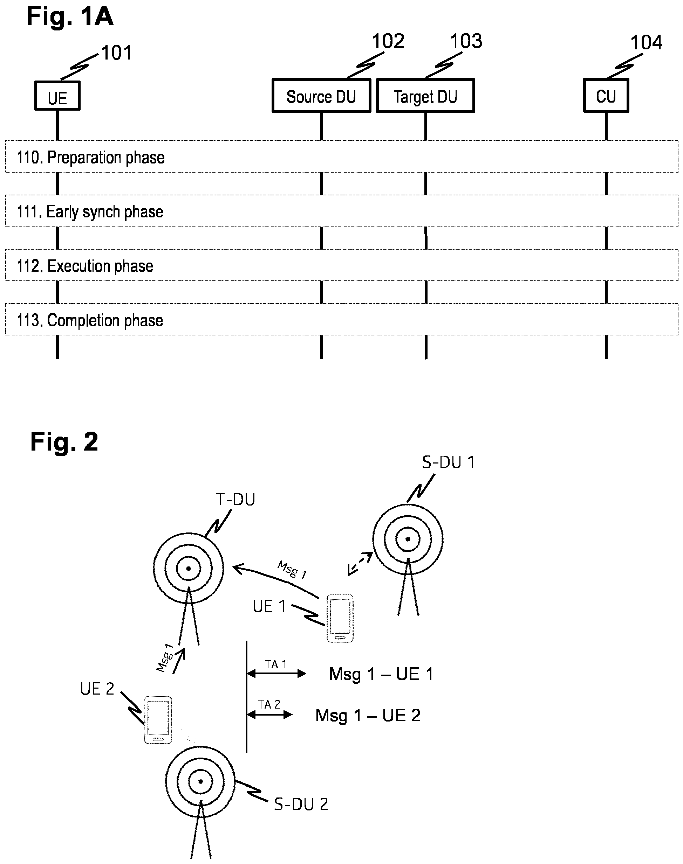

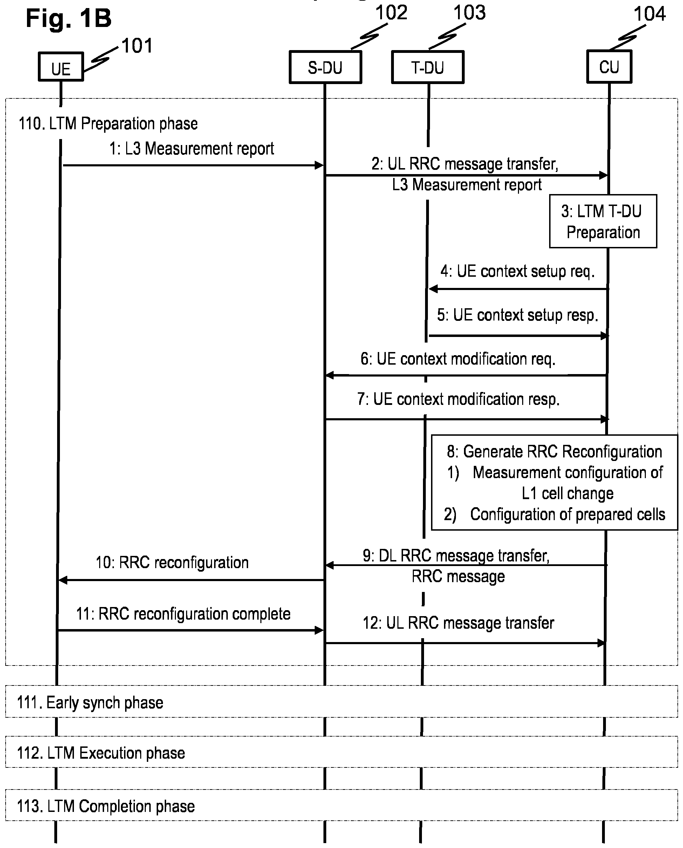

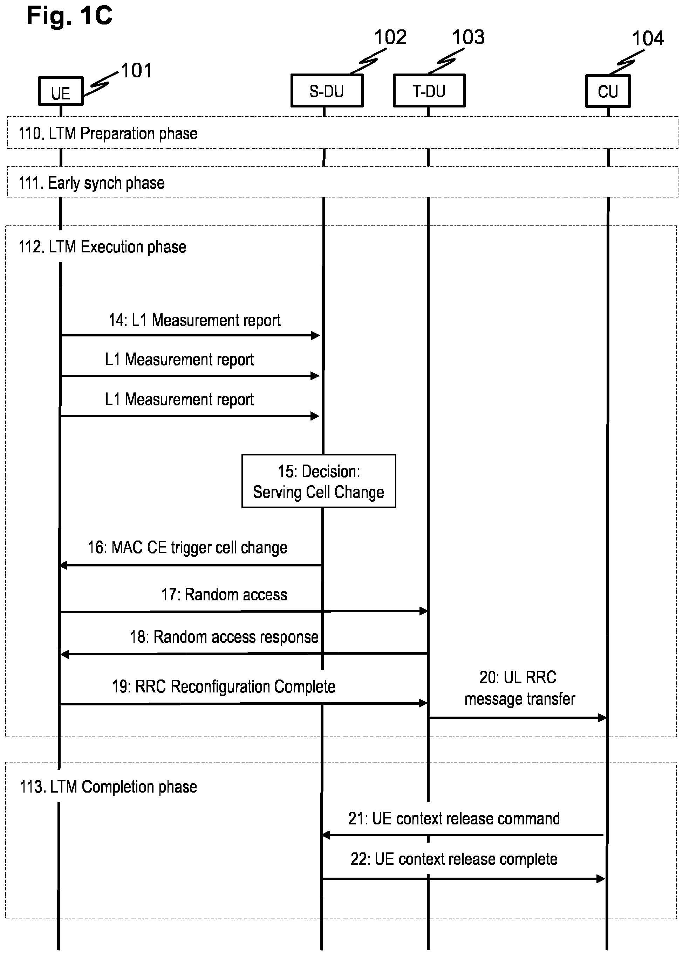

An example embodiment of the present disclosure and its potential advantages are understood by referring to Figs. 1 through 19 of the drawings. In this document, like reference signs denote like parts or steps.

In the following, various example embodiments of present disclosure are discussed in detail in the context of 5G NR technology. It is however to be noted that various example embodiments of present disclosure may be equally applied to other mobile networks and radio communication technologies (e.g. future technologies) in addition to 5G NR.

The radio access network (RAN) of a mobile network may be split into a radio unit (RU), a distributed unit (DU), and a central unit (CU). The RU is where the radio frequency signals are transmitted, received, amplified, and digitized. The RU is located near or integrated into, the antenna. The DU and CU are the computation parts of the base station (gNB in 5G), sending the digitalized radio signal into the network. The split of the functionalities between the DU and CU may vary. The CU may provide support for the higher layers of the protocol stack while the DU provides support for the lower layers of the protocol stack. Various example embodiments of present disclosure define certain functionalities for the DU and/or CU. It is to be noted that even though the terms DU and CU are used in this disclosure, some other names may be used for the respective units, too, e.g. in future technologies.

Various embodiments of present disclosure relate to L1/L2 triggered mobility (LTM) procedure. In the context of the present disclosure, the protocol layers L1, L2, L3 follow the same meaning as in the 3GPP standard specifications. L1 (Layer 1) refers to the physical layer, L2 (Layer 2) refers to the medium access control (MAC), the radio link control (RLC), and the packet data convergence protocol (PDCP) layers, and L3 (Layer 3) refers to the radio resource control (RRC) layer. LTM may thus be understood as a lower layer handover procedure where a handover command is triggered on a protocol layer below L3 (the RRC layer), e.g. on the L1 or L2.

The present disclosure uses the terms source DU and target DU. It may be defined that the source DU comprises a cell that serves a UE involved in the LTM procedure and that the target DU comprises a cell that has been prepared as a target cell in the LTM procedure. The terms serving cell, serving DU, source cell, and source DU may be used interchangeably and the terms candidate cell, candidate target cell, target cell, target DU, candidate DU, candidate target DU may be used interchangeably. The term target DU ID (T-DU ID) may equally refer to an identifier of a target cell and source DU ID (S-DU ID) may equally refer to an identifier of a source cell.

Figs. 1A-1C show example signaling diagrams of L1/L2 triggered mobility (LTM) procedure. Figs. 1A-1C show a user equipment (UE) 101, a source DU 102, a target DU 103, and a CU 104. In this example, intra-CU mobility is considered, and the CU 104 interacts with both the source DU 102 and the target DU 103. In Fig. 1A the L1/L2 triggered mobility (LTM) procedure is divided into phases: preparation phase 110, early synch phase 111, execution phase 112 and completion phase 113. This division is for illustrative purposes and details of the signaling in the different phases are discussed in connection with Figs. 1B and 1C.

Fig. 1B shows example details of the preparation phase 110. The procedure of the preparation phase 110 proceeds as follows in steps 1-12:
Steps 1-3: The UE 101 sends a L3 Measurement Report message to the CU 104 via the source DU 102. The CU 104 decides to use LTM and initiates LTM candidate cells preparation.
Steps 4-5: The CU 104 sends a UE context setup request to the target DU 103 for the preparation of the target cell. The target DU 103 responds.
Steps 6-7: The CU 104 sends a UE context modification request to the source DU 102 for the preparation of the target cells in the source DU 102. Additionally this message may be used for the provision of target cell information to the source DU 102. The source DU 102 responds.
Steps 8-12: The CU 104 prepares the RRC Configuration and provides it to the UE 101 (via the source DU 102). The UE 101 stores the configuration of LTM candidate target cell(s) and transmits a RRCReconfigurationComplete message to the CU 104.

In the early synch phase 111, the UE performs early UL/DL sync with candidate cells to minimize the interruption during the following LTM execution phase.

Fig. 1C shows example details of the execution phase 111 and the completion phase 112. The procedure of the execution phase 111 proceeds as follows in steps 13-20:
Step 14: The UE 101 performs L1 measurements on the configured LTM candidate target cell(s) and transmits lower-layer measurement reports to the source DU 102.
Step 15-16: The source DU 102 decides to execute LTM cell switch to a target cell and transmits to the UE 101 a MAC CE triggering LTM cell switch.
Step 17: The UE 101 switches to the configuration of the LTM candidate target cell and accesses the target cell. If needed (if TA is not available) the UE 101 performs Random Access process.
Steps 18-20: The UE 101 indicates successful completion of the LTM cell switch towards target cell using an RRC Reconfiguration complete message.

The procedure of the completion phase 113 proceeds as follows in steps 23-24:
Steps 21-22: UE context is released from the source DU 102 if the CU 104 decides accordingly.

It is to be noted that the procedure of Figs. 1A-1C may be extended to inter CU case, where the serving CU may contact another target CU based on L3 measurements to prepare target DU/cells from the target CU. In such case the UE would receive the preparation of those target DU/cells, accordingly, and the source DU may be informed about the target DU/cell preparation configurations, if this is needed.

The early synch phase of the LTM procedure includes Early Timing Advance (TA) acquisition phase, wherein TA of the target DU is acquired. This is performed prior to the UE receiving a cell switch command. There are multiple techniques to implement the Early TA acquisition. The techniques include (i) configuring RAR and receiving the RAR from the target DU, (ii) not configuring RAR and providing the TA with the cell switch command, and (iii) configuring RAR and receiving the RAR from the source DU. In some techniques, the UE may use Contention Based Random Access Procedures (CBRA) procedure for the Early TA acquisition. The UE may first try to use Contention Free Random Access (CFRA) resources if they are configured, but the UE may need to fallback to CBRA for TA acquisition.

Fig. 2 shows an example scenario in a mobile network. Fig. 2 shows two source DUs S-DU 1 and S-DU 2, a target DU T-DU, and two UEs UE 1 and UE 2. Initially, S-DU 1 serves the UE 1 and S-DU 2 serves the UE 2. In some cases, there may be a specific pool of CBRA preambles for the TA acquisition purpose. The CBRA preambles are nevertheless selected randomly. For this reason, both UE 1 and UE 2 may end up trying to use the same CBRA preamble at the same time, when both UE 1 and UE 2 perform CBRA for TA acquisition in LTM procedure in preparation to transfer to the T-DU. Further, there may be other UEs in the respective T-DU that use the CBRA for other purposes than TA acquisition in the LTM procedure and by coincidence use the same CBRA preamble. There is clearly a need to detect and resolve such collision situations.

Legacy CBRA procedure comprises four messages: RA preamble transmission (msg1), RA response (RAR, msg2), RRC (msg 3), RRC setup (msg4). In legacy CBRA, collision detection is performed using msg3 and msg4. However, for the purposes of using CBRA for TA acquisition, there is a need to be able to use reduced number of messages. Various embodiments of present disclosure provide techniques for collision detection in CBRA based TA acquisition with msg1 or with msg1 and msg2. That is, in various embodiments, msg3 and msg4 are not necessarily needed in CBRA based TA acquisition.

In the following, a UE that performs early TA acquisition in the LTM procedure is referred to as TA-UE and a UE that is using CBRA for other purposes than TA acquisition in the LTM procedure is referred to as legacy-UE (L-UE).

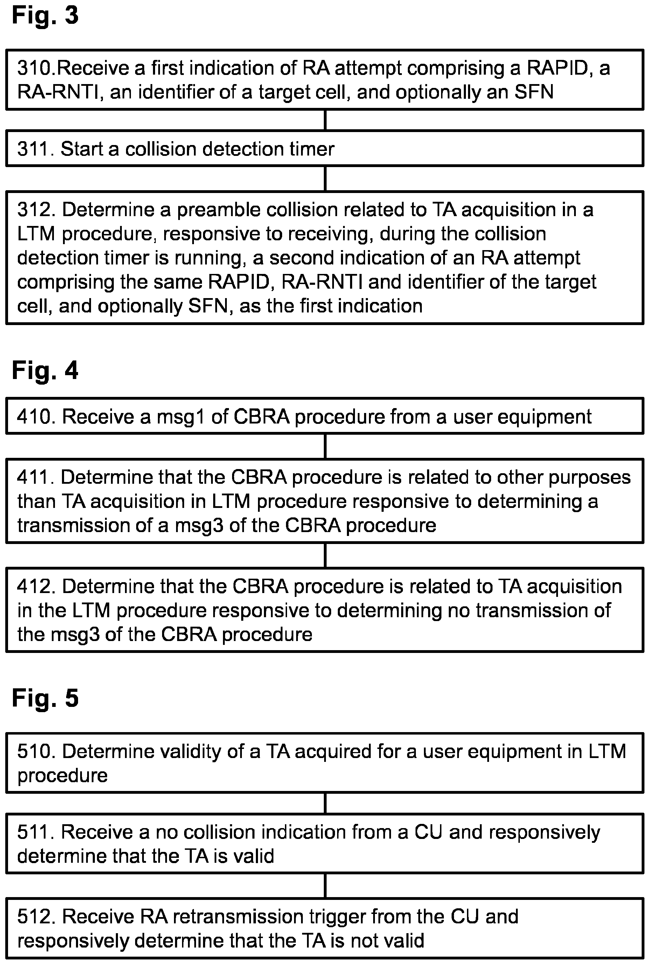

Figs. 3-5 are flow diagrams of processes according to example embodiments. The processes may be implemented in one or more computer programs comprising instructions for performing the steps of the respective process.

Fig. 3 shows a process to be performed in a CU of a mobile network. The process comprises the following steps:
310: Receiving a first indication of a random access, RA, attempt associated with first user equipment, the first indication comprising a predetermined set of RA parameters, such as a RA preamble ID (RAPID); a RA radio network temporary identifier (RA-RNTI); and an identifier of a target cell. Optionally the first indication (the predetermined set of RA parameters) may further comprise a system frame number (SFN).
311: Starting a collision detection timer responsive to receiving the first indication.
312: Determining a preamble collision related to timing advance, TA, acquisition in a Layer1/Layer2 triggered mobility procedure, responsive to receiving, during the collision detection timer is running, a second indication of an RA attempt associated with a second user equipment, the second indication comprising the same predetermined set of RA parameters, such as the same RAPID, RA-RNTI and identifier of the target cell, as the first indication. Optionally determining the preamble collision may require that second indication (the predetermined set of RA parameters) further comprises the same SNF as the first indication.

Fig. 4 shows a process to be performed in a target DU of a mobile network. The process comprises the following steps:
410: Receiving a msg1 of CBRA procedure from a user equipment.
411: Determining that the CBRA procedure is related to other purposes than TA acquisition in LTM procedure responsive to determining a transmission of a msg3 of the CBRA procedure.
412: Determining that the CBRA procedure is related to TA acquisition in the LTM procedure responsive to determining no transmission of the msg3 of the CBRA procedure.

The target DU may receive the msg3 or otherwise determine whether the msg3 has been transmitted e.g. based on energy levels. For example, the target DU may not be able to decode the msg3 (there may be CRC check fail, for example), but the target DU may be able to determine that a msg3 transmission occurred by detecting energy higher than a threshold on specific resources. The same way, no transmission of the msg3 may be determined based on detecting that energy levels of specific resources remain low.

Fig. 5 shows a process to be performed in a source DU of a mobile network. The process comprises the following steps:
510: Determining validity of a TA acquired for a user equipment in LTM procedure. The TA may be acquired by the user equipment or by the source DU.
511: Receiving a no collision indication from a CU and responsively determining that the TA is valid.
512: Additionally or alternatively, receiving a RA retransmission trigger, from the CU, and responsively determining that the TA is not valid.

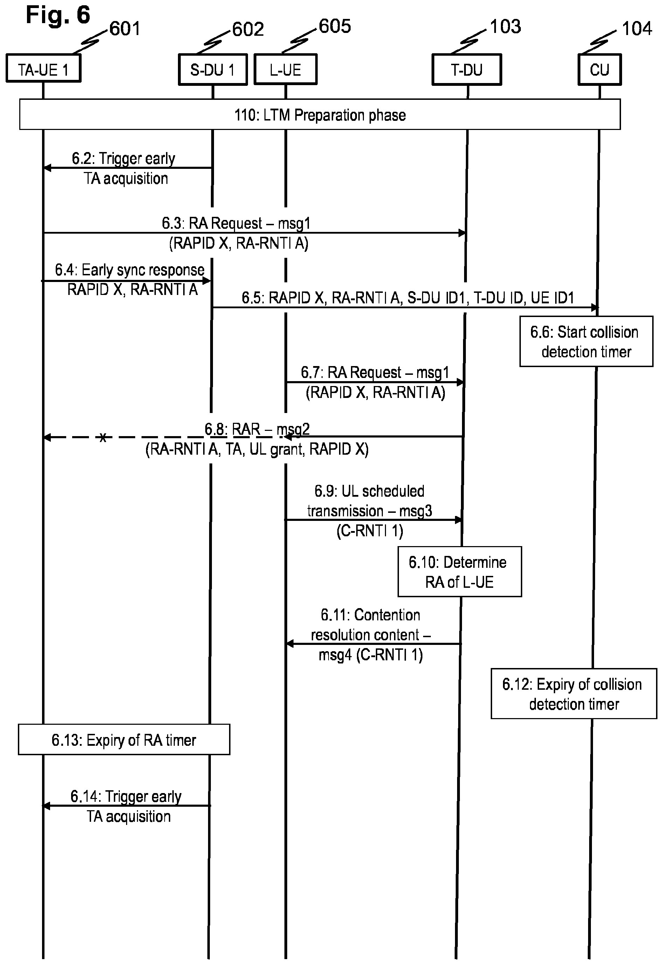

Figs. 6-18 show signaling diagrams of according to some example embodiments. The terms target DU ID (T-DU ID) and source DU ID (S-DU ID) are considered to refer to
Figs. 6-8, 11, and 13 1C show signaling in a scenario comprising a TA-UE 1 601, a source DU 1 602, a legacy UE 605, a target DU 103, and a CU 104.

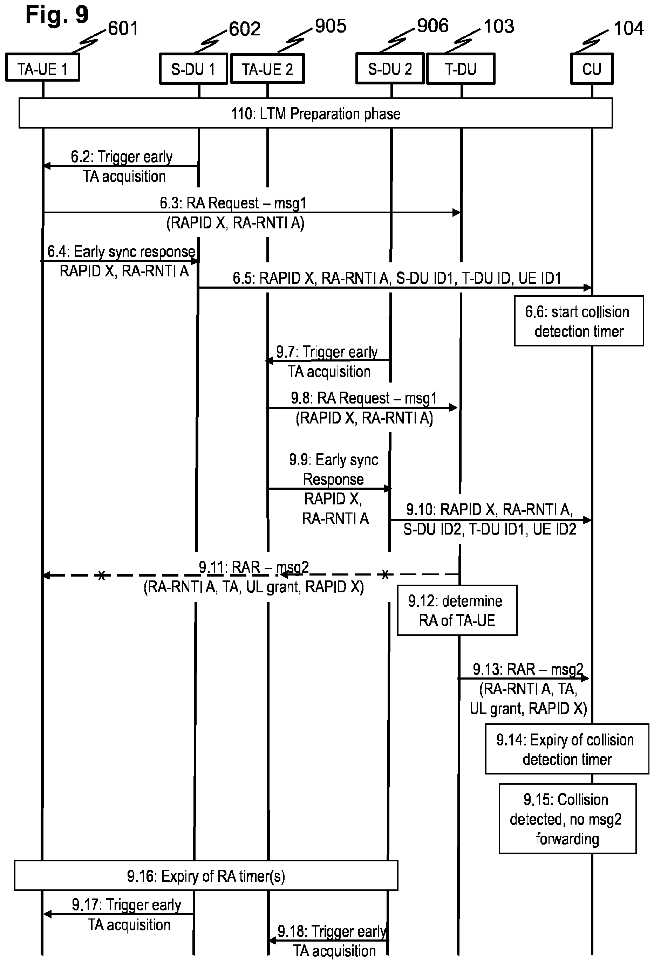

Figs. 9-10, 12, and 14-18 show signaling in a scenario comprising a TA-UE 1 601, a source DU 1 602, a TA-UE 2 905, a source DU 2 906, a target DU 103, and a CU 104.
Figs. 6-10 relate to a scenario where CBRA preamble pool for TA acquisition is not used and RAR is configured and provided via source DU or RAR is not configured. In LTM preparation phase 110, the T-DU is prepared for LTM and the preparation configuration is provided to TA-UE 1. TA-UE 1 is served by S-DU 1 and TA-UE 2 is served by S-DU 2.

In the scenario of Fig. 6, a collision occurs between the TA-UE 1 and the L-UE. After the preparation phase 110, the procedure proceeds as follows:
Step 6.2: The S-DU 1 triggers the TA-UE 1 for early TA acquisition.
Step 6.3: The TA-UE 1 randomly selects one of the available CBRA preamble, RAPID X, and then sends the Random Access Request to T-DU using the RAPID X and a RA-RNTI A. After sending the Random Access Request, TA-UE 1 continues UL/DL signaling with the S-DU.
Step 6.4: The TA-UE 1 indicates to the S-DU 1 the RAPID X and the RA-RNTI A that have been used.
Step 6.5: The S-DU 1 indicates to the CU the UE ID, T-DU ID, RAPID X and the RA-RNTI A of the RA attempt. In an embodiment, a further indication of the time that the RA attempt took place may also be included, e.g. by system frame number (SFN) (not shown in Fig. 6).
Step 6.6: After receiving the indication from the S-DU 1 in step 6.5, the CU starts a collision detection timer. This timer is specific for the target cell (T-DU ID), RAPID X and RA-RNTI A combination. Optionally, the timer is specific for the target cell (T-DU ID), RAPID X, RA-RNTI A, and SFN combination, if SFN is included in the indication in step 6.5.
Step 6.7: The L-UE performs RA with the same preamble RAPID X and same RA-RNTI A (i.e. at the same RA occasion) as the TA-UE 1.
Step 6.8: The T-DU is not aware of the collision of TA-UE 1 and the L-UE using the same preamble and the same RA-RNTI and the T-DU transmits a RAR (msg2 of the CBRA procedure) over the air. The msg2 is received by the L-UE, but not by the TA-UE 1, because TA-UE 1 listens to the downlink of the S-DU 1. The msg2 comprises the RAPID X, the RA-RNTI A, the TA and the UL grant to be used for transmission of msg3 of the CBRA procedure.
Step 6.9: The L-UE transmits msg3, that is used in legacy CBRA for contention resolution, potentially including its C-RNTI (if it has one) in the msg3.
Step 6.10: Based on receiving msg3 on the provided UL grant, the T-DU concludes that a legacy CBRA attempt by a L-UE with RAPID X and RA-RNTI A was made. That is, the T-DU determines based on transmission of the msg3 occurring that the CBRA procedure is related to other purposes than TA acquisition in LTM procedure. Assuming that when CBRA is used for TA acquisition only 1-message-based or 2-message-based RA is involved, it is possible to distinguish legacy CBRA procedure based on the occurrence of the msg3. In an embodiment, the T-DU may not be able to decode the msg3, for example due to CRC check failing, but the T-DU may nevertheless detect that transmission of the msg3 occurred and this may serve as indication that a legacy CBRA attempt by a L-UE with RAPID X and RA-RNTI A was made. The transmission of the msg3 may be determined e.g. by detecting energy higher than a threshold on the UL grant.
Step 6.11: If msg3 was successfully decoded and if necessary, the T-DU transmits to the L-UE a msg4 of the CBRA procedure. Msg4 is used for contention resolution in legacy CBRA.

In the scenario of Fig. 6, the T-DU does not provide any further indication about the RA attempt.

Step 6.12: The collision detection timer expires at the CU without any collision being detected by the CU. That is, in this scenario, the CU does not explicitly detect the collision although the collision occurred.

Step 6.13: An RA timer expires. The RA timer may run either at the TA-UE 1 or at the S-DU 1, depending on whether RAR is configured and received via source-DU or RAR is not configured. In an embodiment, the RA timer is set to be large enough to accommodate the time required for the collision detection timer to expire, as well as the signaling from the TA-UE 1/S-DU 1 to the CU and vice-versa. In other words, the collision detection timer is shorter than the RA timer.

Step 6.14: Based on the RA timer expiring, the S-DU 1 again triggers the TA-UE 1 for early TA acquisition.

An advantage of the scenario of Fig. 6 is that the resource overhead for informing the CU about every legacy RA attempt is avoided.

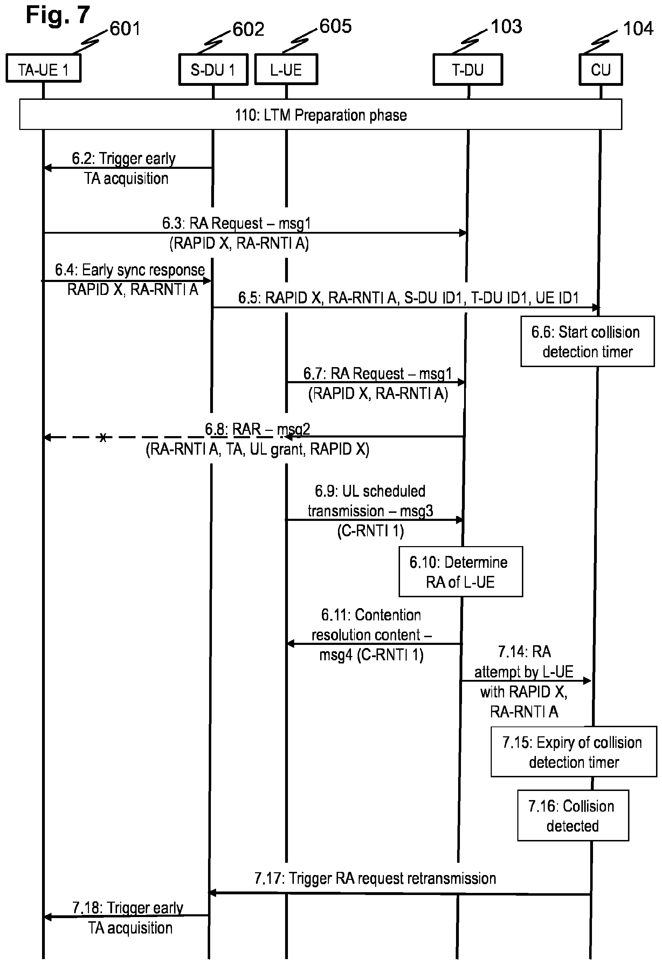

In the scenario of Fig. 7, a collision occurs between the TA-UE 1 and the L-UE. After the preparation phase 110, the procedure proceeds as follows:
Steps 6.1-6.11 may proceed as respective steps in Fig. 6.
7.14: The T-DU indicates to the CU the RA attempt by the L-UE with RAPID X and RA-RNTI A. In an embodiment, the T-DU may additionally include the SFN of the RA attempt.
Step 7.15: The collision detection timer expires at the CU.
Step 7.16: After step 7.14 and before or after the expiry of the collision detection timer at step 7.15, the CU detects that collision has occurred. For the detection of the collision the CU uses at least the T-DU ID, RAPID X and RA-RNTI A. Since the same parameters occur in step 6.5 and step 7.14, it is determined that collision has occurred. The CU may also use the SFN for the collision detection.
Step 7.17: The CU sends to the S-DU 1 a trigger for RA request retransmission. Optionally, the trigger may comprise an indication of a RA back-off for a given number of RA occasions to avoid further collisions. A different number of RA occasions to back-off may be provided to different S-DUs/TA-UEs.
Step 7.18: The S-DU 1 triggers the TA-UE 1 for early TA acquisition.

An advantage of the scenario of Fig. 7 is that the RA retransmission can be triggered before the expiry of the RA timer, upon collision detection at the CU.

It is to be noted that in an alternative case, the CU may start the collision detection timer responsive to the indication in step 7.14. In such case, the collision may be detected if the indication of step 6.5 occurs later on during the collision detection timer is running.

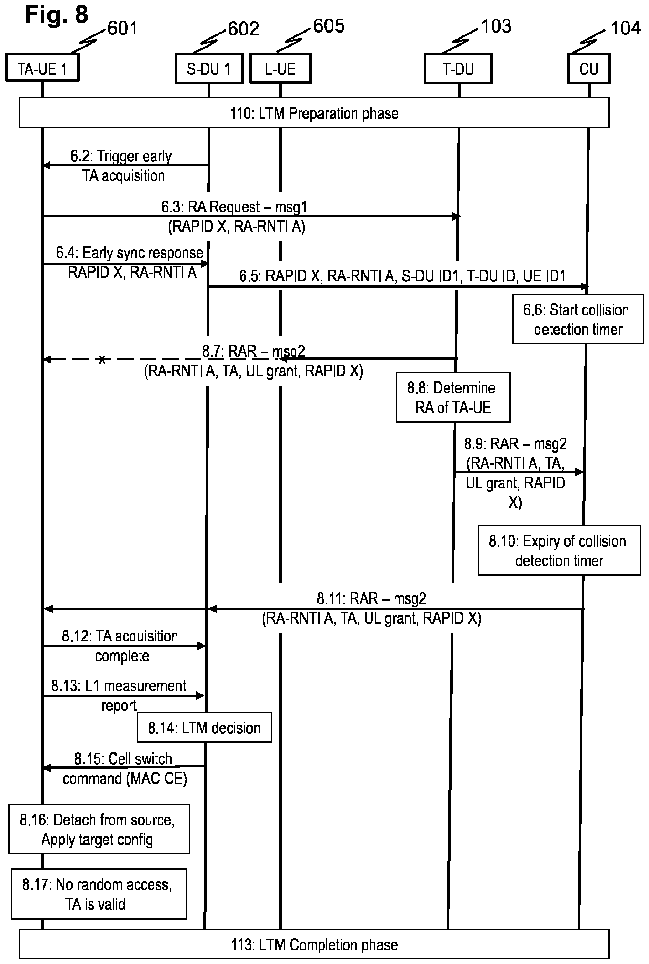

In the scenario of Fig. 8, a collision does not occur. After the preparation phase 110, the procedure proceeds as follows:
Steps 6.1-6.6 may proceed as respective steps in Fig. 6.
Step 8.7: The T-DU transmits a RAR (msg2 of the CBRA procedure) over the air. The msg2 is not received by the TA-UE 1, because TA-UE 1 listens to the downlink of the S-DU 1. The msg2 comprises the RAPID X, the RA-RNTI A, the TA and the UL grant to be used for transmission of msg3 of the CBRA procedure. The msg2 is not really needed in this case, but the T-DU cannot know the purpose of the RA attempt in step 6.3 at this point and, therefore, the T-DU has to transmit the msg2 over the air.
Step 8.8: Responsive to determining no transmission of msg3 on the UL grant provided in the msg2, the T-DU may conclude that the RA attempt in step 6.3 was performed by a TA-UE. This may additionally or alternatively be seen as an indication of no RA attempt from an L-UE interfering with a potential RA attempt from a TA-UE. In an embodiment, no transmission of the msg3 may be determined based on detecting that energy levels on the UL grant remain low, below a certain threshold.
Step 8.9: Based on concluding that the RA attempt was from a TA-UE, the T-DU forwards the RAR msg2 to the CU. In the case where RAR is not configured, the T-DU forwards the TA along with at least the RAPID and RA-RNTI. In a further embodiment, the T-DU may also forward the SFN of the RA attempt.
Step 8.10: The collision detection timer expires, without any collision having occurred.
Step 8.11: The CU forwards the RAR (or TA in the case where RAR is not configured) to the S-DU 1, which in turn may forward the RAR to the TA-UE 1 before the cell switch command, if RAR is configured and provided via the serving cell, or provide the TA to the TA-UE 1 with the cell switch command, if RAR is not configured. TA acquisition is completed.
Steps 8.12-8.18: The TA-UE 1 continues the L1 measurements until the cell switch is decided. Once the cell switch is decided, the S-DU 1 triggers the cell switch and then, the TA-UE 1 uses the TA that is acquired, and hence skips the RACH procedure during the handover.

In the scenario of Fig. 9, a collision occurs between TA-UE 1 and TA-UE 2.

Steps 6.1-6.6 may proceed as respective steps in Fig. 6.

Steps 9.7-9.10: Similar to TA-UE 1 (steps 6.2-6.5), the TA-UE 2 performs RA for early TA acquisition and the CU is informed about it.

Step 9.11: The T-DU transmits a RAR (msg2 of the CBRA procedure) over the air. The msg2 is not received by the TA-UE 1 or the TA-UE 2, because they listen to the downlink of the S-DU 1 and S-DU 2, respectively. The msg2 comprises the RAPID X, the RA-RNTI A, the TA and the UL grant to be used for transmission of msg3 of the CBRA procedure. The msg2 is not really needed in this case, but the T-DU cannot know the purpose of the RA attempt in step 6.3 and/or step 9.8 at this point and, therefore, the T-DU has to transmit the msg2 over the air.

Step 9.12: Responsive to determining no transmission of msg3 on the UL grant provided in the msg2, the T-DU may conclude that the RA attempt in step 6.3 and/or step 9.8 was performed by a TA-UE. This may additionally or alternatively be seen as an indication of no RA attempt from an L-UE interfering with a potential RA attempt from a TA-UE. In an embodiment, no transmission of the msg3 may be determined based on detecting that energy levels on the UL grant remain low, below a certain threshold.

Step 9.13: Based on concluding that the RA attempt was from a TA-UE, the T-DU forwards the RAR msg2 to the CU. In the case where RAR is not configured, the T-DU forwards the TA along with at least the RAPID and RA-RNTI. In a further embodiment, the T-DU may also forward the SFN of the RA attempt.

Step 9.14: The collision detection timer expires at the CU.

Step 9.15: After step 9.10, and before or after the expiry of the collision detection timer at step 9.14, the CU detects the collision has occurred. For the detection of the collision the CU uses at least the T-DU ID, RAPID X and RA-RNTI A. The CU may also use the SFN for the collision detection. Since the same parameters occur in step 6.5 and step 9.10, it is determined that collision has occurred. Further, the CU does not forward the msg2 (RAR/TA) to the S-DUs/TA-UEs.

Step 9.16: RA timers expire. The RA timers may run either at the TA-UE 1 or at the S-DU 1, and respectively at the TA-UE 2 or at the S-DU 2 depending on whether RAR is configured and received via source DU or RAR is not configured. In an embodiment, the RA timers are set to be large enough to accommodate the time required for the collision detection timer to expire, as well as the signaling from the TA-UE 1/S-DU 1 or TA-UE 2/S-DU 2 to the CU and vice-versa. In other words, the collision detection timer is shorter than the RA timer.

Steps 9.17, 9.18: Based on the RA timers expiring, the S-DU 1 triggers the TA-UE 1 for early TA acquisition and the S-DU 2 triggers the TA-UE 2 for early TA acquisition.

An advantage of the scenario of Fig. 9 is that the resource overhead for informing the S-DUs/TA-UEs about the collision is avoided.

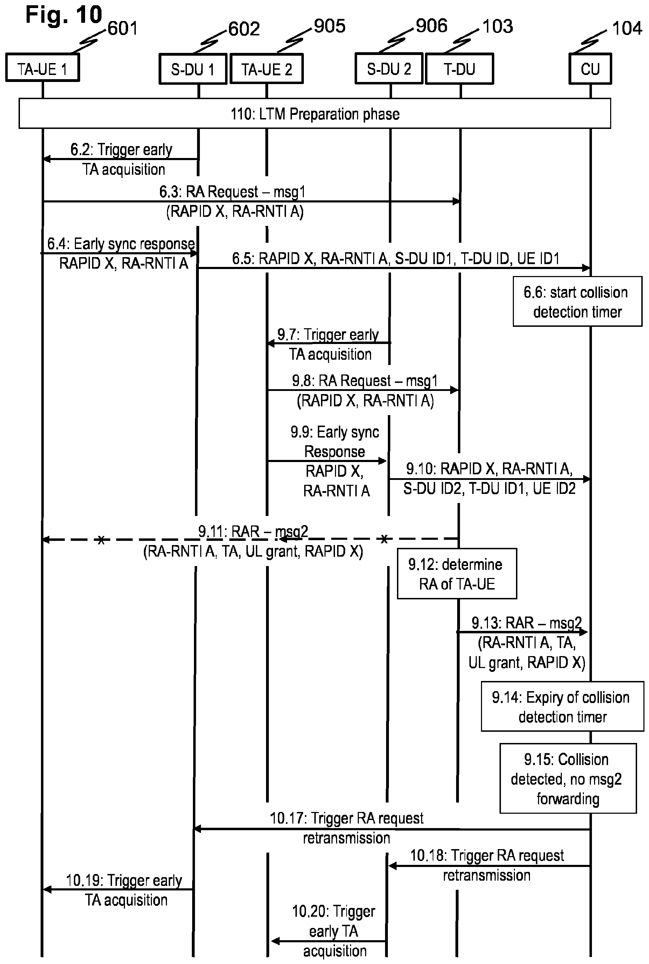

In the scenario of Fig. 10 a collision occurs between the TA-UE 1 and the TA-UE 2.

Steps 6.1-6.6 may proceed as respective steps in Fig. 6.

Steps 9.7-9.15 may proceed as respective steps in Fig. 9.

Steps 10.17, 10.18: The CU sends to the S-DU 1 and the S-DU 2 a trigger for RA request retransmission. Optionally, the trigger may comprise an indication of a RA back-off for a given number of RA occasions to avoid further collisions. A different number of RA occasions to back-off may be provided to different S-DUs/TA-UEs.

Steps 10.19, 10.20: The S-DU 1 triggers the TA-UE 1 for early TA acquisition and the S-DU 2 triggers the TA-UE 2 for early TA acquisition.

An advantage of the scenario of Fig. 10 is that the RA retransmission can be triggered before the expiry of the RA timer, upon collision detection.

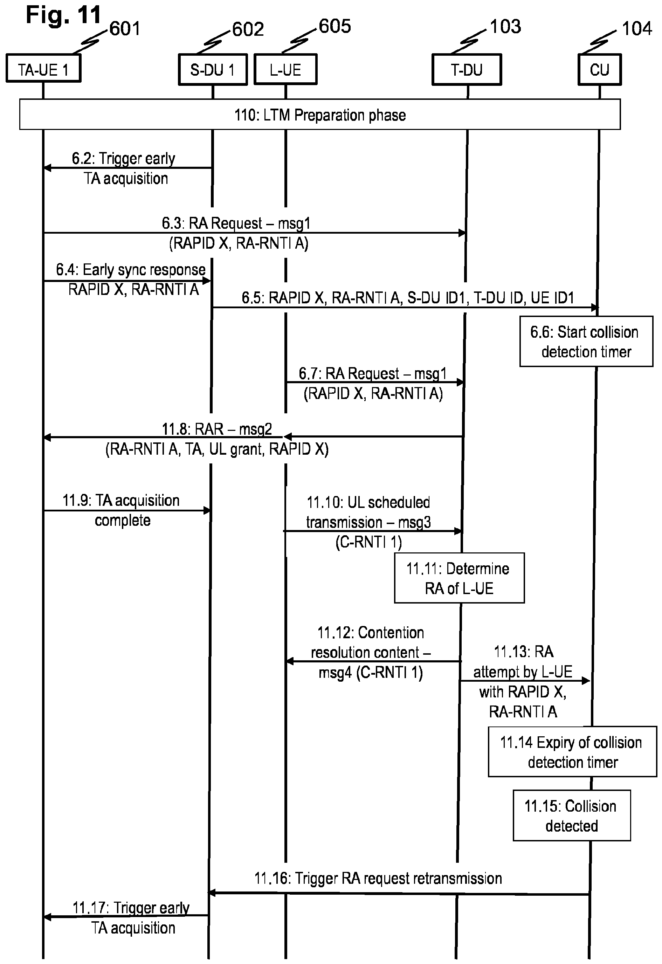

Figs. 11-13 relate to a scenario where CBRA preamble pool for TA acquisition is not used and RAR is configured and provided via target DU. In LTM preparation phase 110, the T-DU is prepared for LTM and the preparation configuration is provided to TA-UE 1. TA-UE 1 is served by S-DU 1 and TA-UE 2 is served by S-DU 2.

In the scenario of Fig. 11, a collision occurs between the TA-UE 1 and the L-UE. After the preparation phase 110, the procedure proceeds as follows:
Steps 6.1-6.7 may proceed as respective steps in Fig. 6.
Step 11.8: The T-DU transmits a RAR (msg2 of the CBRA procedure) over the air. The msg2 is received is received by the L-UE and by TA-UE 1, because in this scenario TA-UE 1 listens to the downlink of the target cell. The msg2 comprises RAPID X, the RA-RNTI A, the TA and the UL grant to be used for transmission of msg3 of the CBRA procedure. It is possible that the provided TA is intended for the L-UE, but the TA-UE 1 falsely assumes that it is intended for it.
Step 11.9: The TA-UE 1 informs the S-DU 1 that it has acquired the TA. In some embodiments, there are provided methods for the S-DU 1 to determine whether the acquired TA is considered valid. Such methods are discussed e.g. in connection with Fig. 5.
Steps 11.10-11.12 may proceed as steps 6.9-6.11 in Fig. 6.
Step 11.13: The T-DU indicates to the CU the RA attempt by the L-UE with RAPID X and RA-RNTI A. In an embodiment, the T-DU may additionally include the SFN of the RA attempt.
Step 11.14: The collision detection timer expires at the CU.
Step 11.15: After step 11.13 and before or after the expiry of the collision detection timer at step 11.14, the CU detects that collision has occurred. For the detection of the collision the CU uses at least the T-DU ID, RAPID X and RA-RNTI A. Since the same parameters occur in step 6.5 and step 11.13, it is determined that collision has occurred. The CU may also use the SFN for the collision detection.
Step 11.16: The CU sends to S-DU 1 a trigger for RA request retransmission. Optionally, the trigger may comprise an indication of a RA back-off for a given number of RA occasions to avoid further collisions. A different number of RA occasions to back-off may be provided to different S-DUs/TA-UEs. It is noted that in this scenario, unlike the scenario of Fig. 7, the trigger of RA retransmission is necessary to invalidate the TA received by TA-UE 1 in step 11.8.
Step 11.17: The S-DU 1 triggers the TA-UE 1 for early TA acquisition.

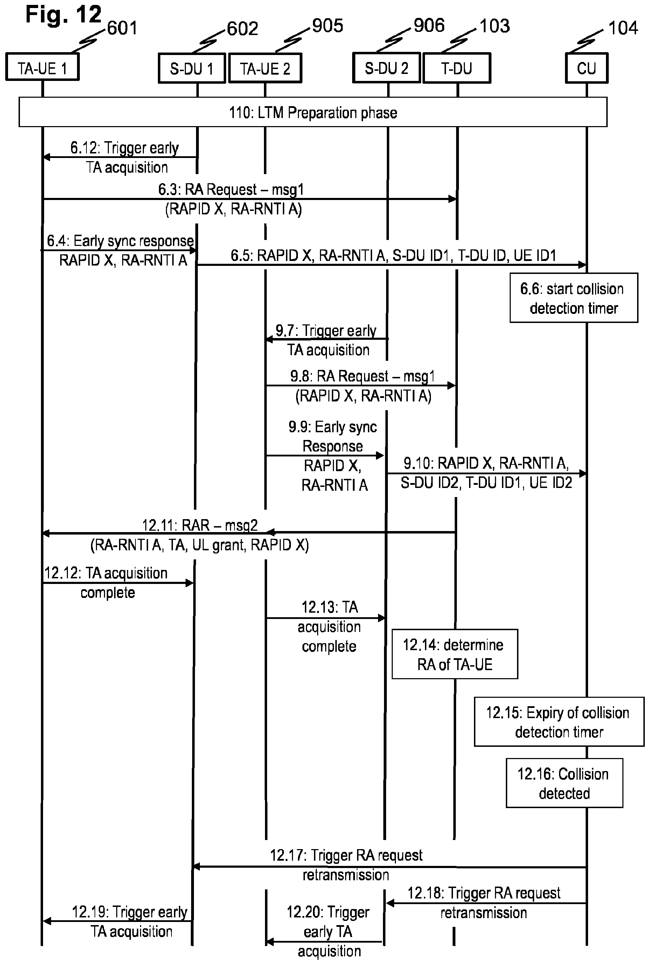

In the scenario of Fig. 12, a collision occurs between TA-UE 1 and TA-UE 2.

Steps 6.1-6.6 may proceed as respective steps in Fig. 6.

Steps 9.7-9.15 may proceed as respective steps in Fig. 9.

Step 12.11: The T-DU transmits a RAR (msg2) over the air. The msg2 is received by the TA-UE 1 and the TA-UE 2, because they listen to the downlink of the target cell. The T-DU transmits a RAR (msg2 of the CBRA procedure) over the air. The msg2 comprises the RAPID X, the RA-RNTI A, the TA and the UL grant to be used for transmission of msg3 of the CBRA procedure.

Steps 12.12, 12.13: The TA-UEs inform the respective S-DUs that they have acquired the TAs. In some embodiments, there are provided methods for the S-DU 1 to determine whether the acquired TA is considered valid. Such methods are discussed e.g. in connection with Fig. 5.

Step 12.14 may proceed as step 9.12 in Fig. 9.

Step 12.15: The collision detection timer expires at the CU.

Step 12.16: After step 9.10, and before or after the expiry of the collision detection timer at step 12.15, the CU detects the collision has occurred. For the detection of the collision the CU uses at least the T-DU ID, RAPID X and RA-RNTI A. The CU may also use the SFN for the collision detection. Since the same parameters occur in step 6.5 and step 9.10, it is determined that collision has occurred.

Steps 12.17, 12.18: The CU sends to the S-DU 1 and the S-DU 2 a trigger for RA request retransmission. Optionally, the trigger may comprise an indication of a RA back-off for a given number of RA occasions to avoid further collisions. A different number of RA occasions to back-off may be provided to different S-DUs/TA-UEs. It is noted that in this scenario, unlike the scenario of Fig. 7, the trigger of RA retransmission is necessary to invalidate the TAs received by the TA-UE 1 and TA-UE 2 in step 12.11.

Steps 12.19, 12.20: The S-DU 1 triggers the TA-UE 1 for early TA acquisition and the S-DU 2 triggers the TA-UE 2 for early TA acquisition.

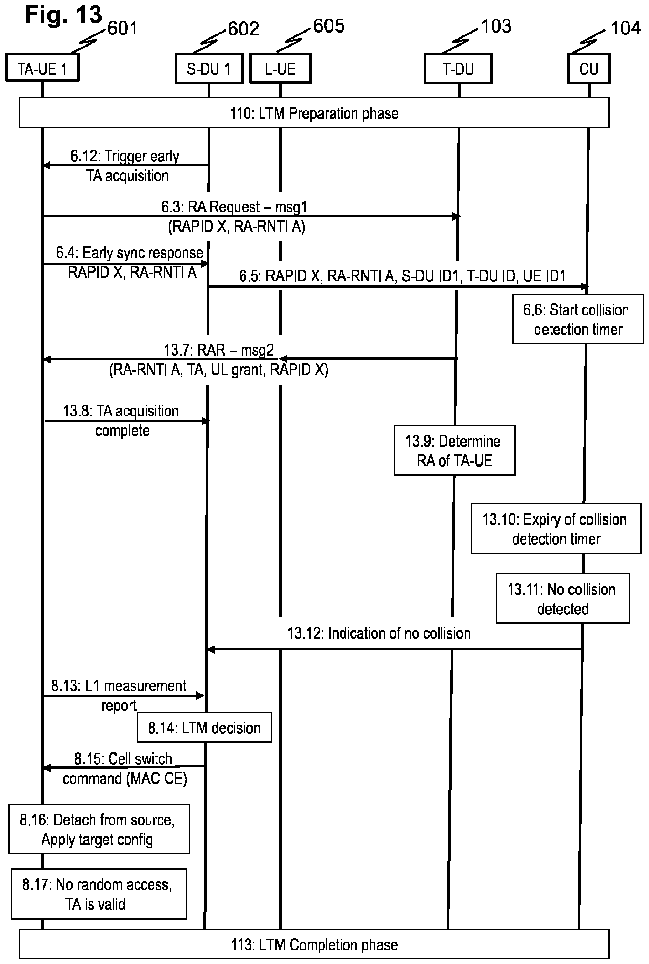

In the scenario of Fig. 13, a collision does not occur.

Steps 6.1-6.6 may proceed as respective steps in Fig. 6.

Step 13.7: T-DU transmits a RAR (msg2 of the CBRA procedure) over the air. The msg2 is received is received by the L-UE and by TA-UE 1, because in this scenario TA-UE 1 listens to the downlink of the target cell. The msg2 comprises RAPID X, the RA-RNTI A, the TA and the UL grant to be used for transmission of msg3 of the CBRA procedure.

Step 13.8: The TA-UE 1 informs the S-DU 1 that it has acquired the TA.

Step 13.9: Responsive to determining no transmission of msg3 on the UL grant provided in the msg2, the T-DU may conclude that the RA attempt in step 6.3 was performed by a TA-UE. This may additionally or alternatively be seen as an indication of no RA attempt from an L-UE interfering with a potential RA attempt from a TA-UE. In an embodiment, no transmission of the msg3 may be determined based on detecting that energy levels on the UL grant remain low, below a certain threshold.

Step 13.10: The collision detection timer expires, without any collision having occurred.

Step 13.11: The CU determines no collision.

Step 13.12: The CU sends to the S-DU 1 an indication that no collision has been detected. Therefore, the S-DU 1 can consider that the TA acquired by TA-UE 1 in step 13.7 is valid. An advantage of this option is that S-DU 1 has guarantees about the validity of the TA, although an additional delay is required for the TA to be considered valid.

Alternatively, the indication of step 13.12 is not sent. In this case, the S-DU 1 implicitly assumes that the TA is valid, unless explicitly invalidated e.g. by a RA retransmission request. An advantage of this option is its low latency, although it is possible that an LTM decision is made without guarantees about the validity of the TA. Additionally or alternatively, the S-DU 1 may start a timer responsive to the message in step 13.8. Then, if the timer expires and no RA retransmission request or other indication of collision has been received from the CU by S-DU 1, then the S-DU 1 can consider that the TA acquired by TA-UE 1 is valid.

Steps 8.13-8.17 may proceed as respective steps in Fig. 8.

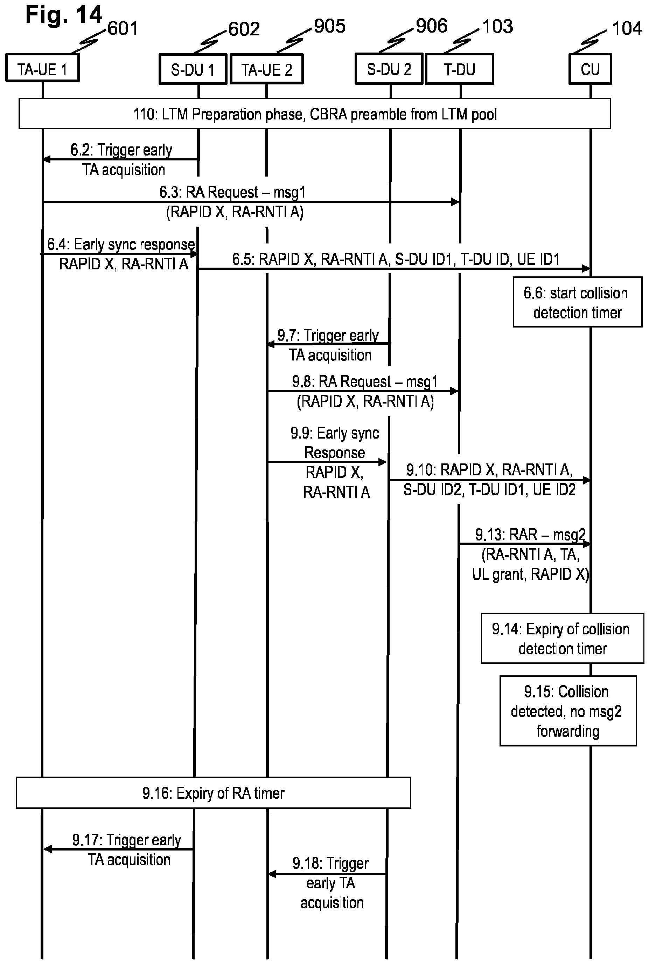

Figs. 14-16 relate to a scenario where CBRA preamble pool for TA acquisition is used and RAR is configured and provided via source DU. Using the CBRA pool avoids collisions between TA-UEs and L-UEs, but collisions may still occur between TA-UEs. Figs. 14-16 relate to the case of early TA acquisition with 2-message-based CBRA. The signaling of Figs. 14-16 is also applicable to the case where RAR is not configured and the TA is provided with the cell switch command, instead of RAR. This is the case of early TA acquisition with 1-message-based CBRA. In LTM preparation phase 110, the T-DU is prepared for LTM and the preparation configuration is provided to TA-UE 1. TA-UE 1 is served by S-DU 1 and TA-UE 2 is served by S-DU 2.

In the scenario of Fig. 14, a collision occurs between TA-UE 1 and TA-UE 2. The scenario of Fig. 14 is to some extent similar to the scenario of Fig. 9. After the preparation phase 110, the procedure proceeds as follows:
Steps 6.1-6.7 may proceed as respective steps in Fig. 6.
Steps 9.7-9.10 may proceed as respective steps in Fig. 9.

The difference on the scenario of Fig. 14 and the scenario of Fig. 9 is that in the scenario of Fig. 14, the transmission of RAR (msg2 of the CBRA procedure) in step 9.11 of Fig. 9 and checking, whether the transmission of msg3 of the CBRA procedure is detected or not, are not needed, as the T-DU may directly conclude from the preamble that is used that the RA attempt is for TA acquisition in LTM procedure.

Steps 9.13-9.18 may proceed as respective steps in Fig. 9.

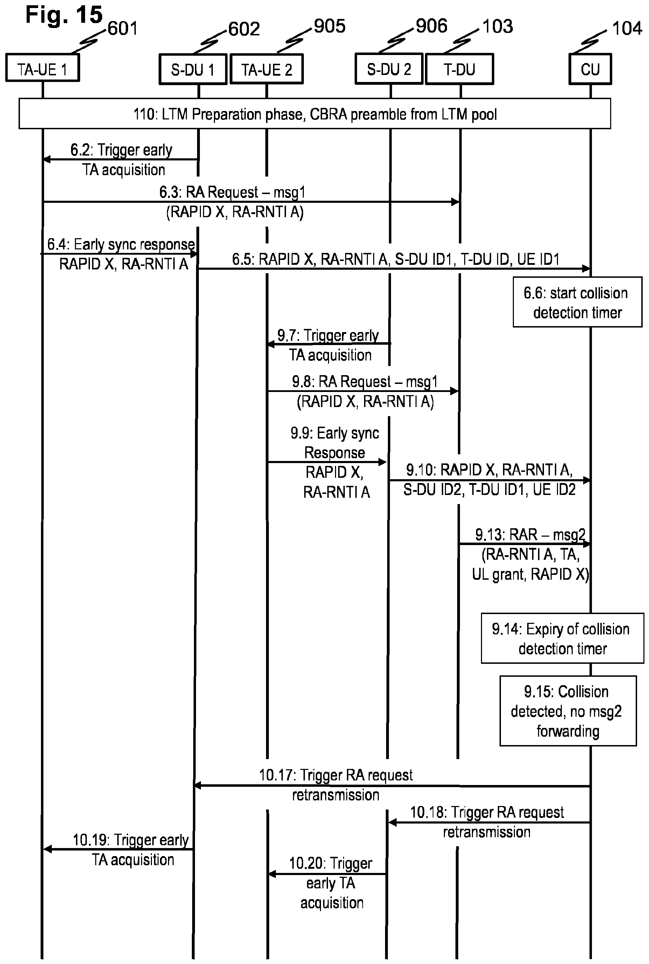

In the scenario of Fig. 15, a collision occurs between TA-UE 1 and TA-UE 2. The scenario of Fig. 15 is to some extent similar to the scenarios of Figs. 9 and 10. After the preparation phase 110, the procedure proceeds as follows:

Steps 6.1-6.7 may proceed as respective steps in Fig. 6.

Steps 9.7-9.10 may proceed as respective steps in Fig. 9.

The difference on the scenario of Fig. 15 and the scenarios of Figs. 9 and 10 is that in the scenario of Fig. 15, the transmission of RAR (msg2 of the CBRA procedure) in step 9.11 of Figs. 9 and 10 and checking, whether the transmission of msg3 of the CBRA procedure is detected or not, are not needed, as the T-DU may directly conclude from the preamble that is used that the RA attempt is for TA acquisition in LTM procedure.

Steps 9.13-9.15 may proceed as respective steps in Fig. 9.

Steps 10.17-10.20 may proceed as respective steps in Fig. 10.

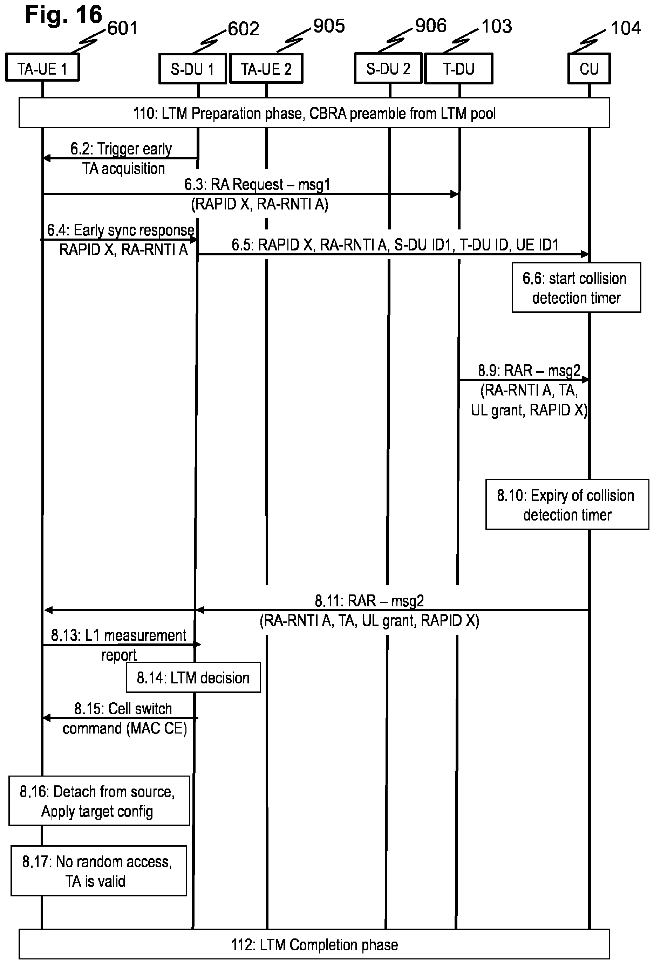

In the scenario of Fig. 16, no collision occurs. The scenario of Fig. 16 is to some extent similar to the scenario of Figs. 8. After the preparation phase 110, the procedure proceeds as follows:

Steps 6.1-6.7 may proceed as respective steps in Fig. 6.

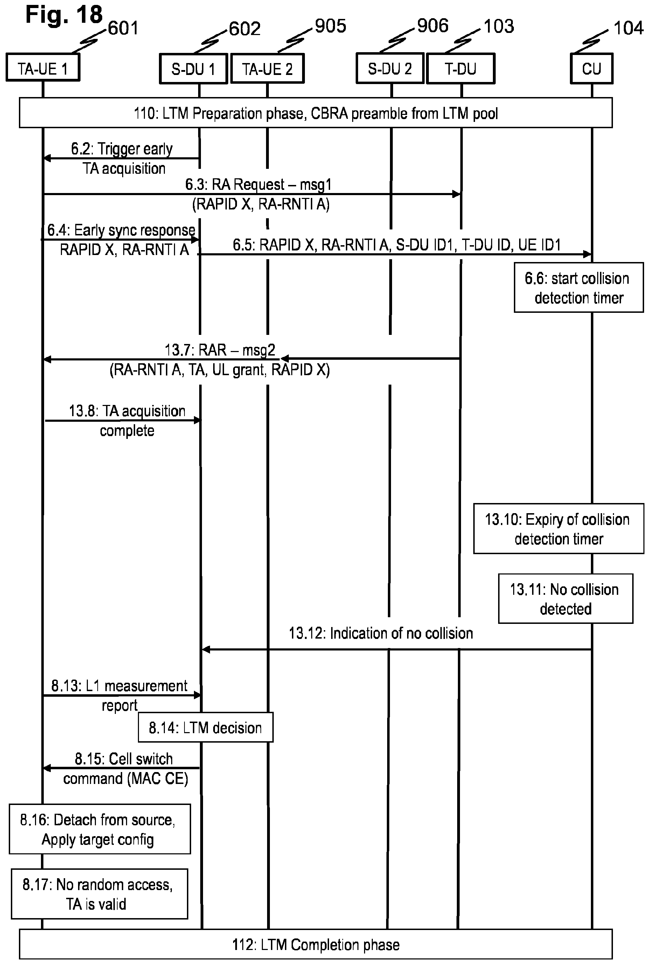

The difference on the scenario of Fig. 18 and the scenario of Fig. 8 is that in the scenario of Fig. 16, the transmission of RAR (msg2 of the CBRA procedure) in step 8.7 of Fig. 8 and checking, whether the transmission of msg3 of the CBRA procedure is detected or not, are not needed, as the T-DU may directly conclude from the preamble that is used that the RA attempt is for TA acquisition in LTM procedure.

Steps 8.9-8.17 may proceed as respective steps in Fig. 8.

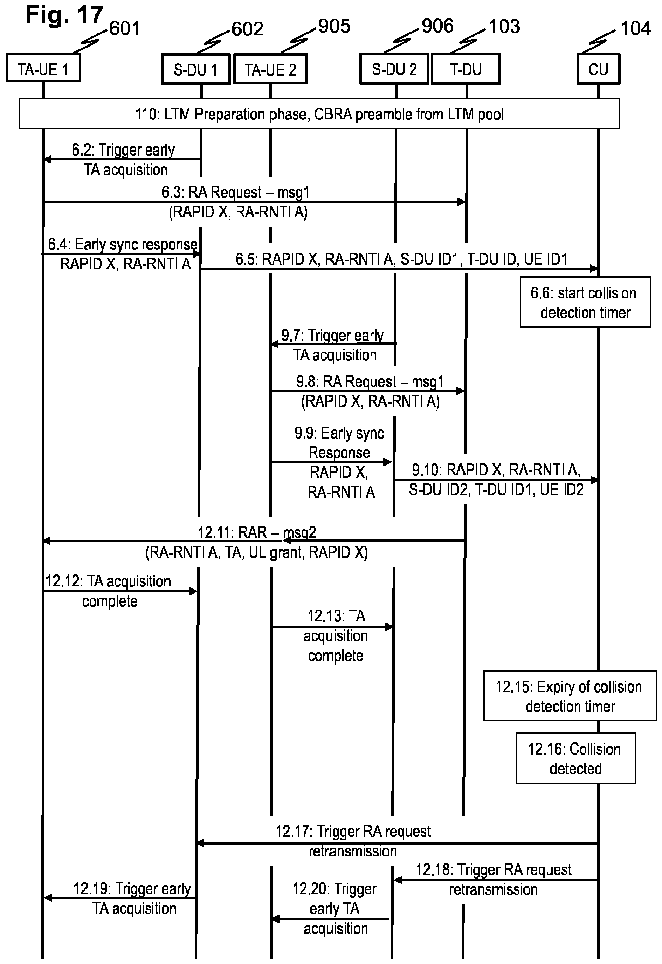

Figs. 17-18 relate to a scenario where CBRA preamble pool for TA acquisition is used and RAR is configured and provided via target DU. Using the CBRA pool avoids collisions between TA-UEs and L-UEs, but collisions may still occur between TA-UEs. Figs. 17-18 relate to the case of early TA acquisition with 2-message-based CBRA. In LTM preparation phase 110, the T-DU is prepared for LTM and the preparation configuration is provided to TA-UE 1. TA-UE 1 is served by S-DU 1 and TA-UE 2 is served by S-DU 2.

In the scenario of Fig. 17, a collision occurs between TA-UE 1 and TA-UE 2. The scenario of Fig. 17 is to some extent similar to the scenario of Fig. 12. After the preparation phase 110, the procedure proceeds as follows:
Steps 6.1-6.7 may proceed as respective steps in Fig. 6.
Steps 9.7-9.10 may proceed as respective steps in Fig. 9.

The difference on the scenario of Fig. 17 and the scenario of Fig. 12 is that in the scenario of Fig. 17, checking, whether the transmission of msg3 of the CBRA procedure is detected or not, is not needed, as the T-DU may directly conclude from the preamble that is used that the RA attempt is for TA acquisition in LTM procedure.

Steps 12.11-12.13 and 12.15-12.20 may proceed as respective steps in Fig. 12.

In the scenario of Fig. 18, no collision occurs. The scenario of Fig. 18 is to some extent similar to the scenario of Fig. 13. After the preparation phase 110, the procedure proceeds as follows:
Steps 6.1-6.7 may proceed as respective steps in Fig. 6.

The difference on the scenario of Fig. 18 and the scenario of Fig. 13 is that in the scenario of Fig. 18, checking, whether the transmission of msg3 of the CBRA procedure is detected or not, is not needed, as the T-DU may directly conclude from the preamble that is used that the RA attempt is for TA acquisition in LTM procedure.

Steps 13.7-13.8 and 13.10-13.12 may proceed as respective steps in Fig. 13.

Steps 8.13-8.17 may proceed as respective steps in Fig. 8.

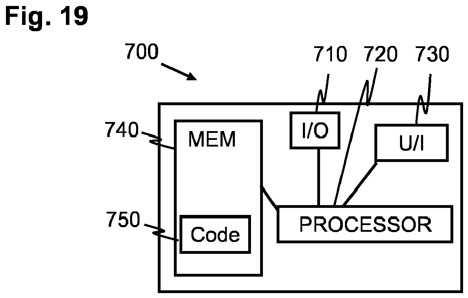

Fig. 19 shows a block diagram of an apparatus 700 according to an example embodiment. The apparatus 700 may operate as a network element, such as the source DU 102, the target DU 103 or the CU 104 of Figs. 1A-1C, and 6-18. The apparatus 700 generally comprises a memory 740 including a computer program code 750. The apparatus 700 further comprises a processor 720 for controlling the operation of the apparatus 700 using the computer program code 750, and a communication unit 710 for communicating with other network elements and other devices. Further, the apparatus 700 may comprise a user interface unit 730.

The communication unit 710 comprises, for example, one or more of: a local area network (LAN) port; a wireless local area network (WLAN) unit; Bluetooth unit; cellular data communication unit; or satellite data communication unit. The communication interface 710 may support one or more different communication technologies. The communication interface 710 may support Ethernet communications and/or IP based communications. The apparatus 700 may also or alternatively comprise more than one of the communication interfaces 710. The processor 720 comprises, for example, any one or more of: a master control unit (MCU); a microprocessor; a digital signal processor (DSP); an application specific integrated circuit (ASIC); a field programmable gate array; and a microcontroller. The user interface unit 730 may comprise a circuitry for receiving input from a user of the apparatus 700, e.g., via a keyboard; graphical user interface of a display; speech recognition circuitry; or an accessory device; such as a headset; and for providing output to the user via, e.g., a graphical user interface or a loudspeaker. Various parts may be implemented using more than one corresponding or different elements, such as memories and storages may be multiplied for capacity and/or redundancy purposes. Similarly, processing and/or communications may be implemented with multiple parallel or elements for capacity and/or redundancy purposes.

The computer program code 750 may control the apparatus 700 to provide one or more example embodiments of present disclosure, such as suitable parts of Figs. 3-18.

As used in this application, the term "circuitry" may refer to one or more or all of the following:
(a) hardware-only circuit implementations (such as implementations in only analog and/or digital circuitry) and;
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is improved mobility procedure for mobile networks as various embodiments provide methods for preamble collision detection in TA acquisition phase of LTM procedure and methods for solving detected preamble collision for different scenarios. In this way, preamble collision in early TA acquisition of the LTM procedure may be avoided.

A further technical effect of one or more of the example embodiments disclosed herein is that 1-message-based or 2-message-based CBRA is enabled for TA acquisition.

Embodiments of the present disclosure may be implemented in software, hardware, application logic or a combination of software, hardware, and application logic. The software, application logic and/or hardware may reside e.g. on the source DU, the target DU, the CU, or the UE of the foregoing disclosure. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 19. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of present disclosure are set out in the independent claims, other aspects may comprise other combinations of features from the described embodiments and/or the dependent claims with the features of the independent claims, and not solely the combinations explicitly set out in the claims.

It is also noted herein that while the foregoing describes example embodiments, these descriptions should not be viewed in a limiting sense. Rather, there are several variations and modifications which may be made without departing from the scope of the present disclosure as defined in the appended claims.

### LIST OF ABBREVIATIONS

- CBRA: Contention Based RA
- CFRA: Contention Free RA
- CR: Change Request
- CU: Central Unit
- DCI: Downlink Control Information
- DL: Downlink
- DU: Distributed Unit
- HO: Handover
- L1: Layer 1
- L2: Layer 2
- LTM: L1/L2 Triggered Mobility
- MAC CE: MAC (Medium Access Control) Control Element
- MSC: Message Sequence Chart
- PDCCH: Physical Downlink Control Channel
- RA: Random Access
- RACH: RA Channel
- RAN: Radio Access Network
- RAPID: RA Preamble ID
- RAR: RA Response
- RA-RNTI: RA Radio Network Temporary Identifier
- S-DU: Source DU
- SFN: System Frame Number
- TA: Timing Advance
- TC-RNTI: Temporary Cell Radio Network Temporary Identifier
- T-DU: Target DU
- UE: User Equipment
- UL: Uplink

## Claims

1. An apparatus comprising
at least one processor; and
at least one memory including executable instructions that, when executed by the at least one processor, cause the apparatus:
to receive a first indication of a random access, RA, attempt associated with a first user equipment, the first indication comprising a RA preamble ID, RAPID; a RA radio network temporary identifier, RA-RNTI; and an identifier of a target cell;
to start a collision detection timer responsive to receiving the first indication; and
to determine a preamble collision related to timing advance, TA, acquisition in a Layer1/Layer2 triggered mobility, LTM, procedure, responsive to receiving during the collision detection timer is running, a second indication of an RA attempt associated with a second user equipment, the second indication comprising the same RAPID, RA-RNTI and identifier of the target cell as the first indication.

2. The apparatus of claim 1, wherein the first indication and the second indication further comprise the same system frame number, SFN.

3. The apparatus of any preceding claim, wherein the apparatus is caused to trigger RA retransmission by at least one of the first user equipment and the second user equipment responsive to determining the preamble collision.

4. The apparatus of claim 3, wherein the apparatus is caused to indicate a RA back-off for a given number of RA occasions in connection with triggering the RA retransmission.

5. The apparatus of any preceding claim, wherein the apparatus is caused to omit forwarding a msg2 of contention based random access, CBRA, procedure responsive to determining the preamble collision.

6. The apparatus of any preceding claim, wherein the collision detection timer is specific for the respective combination of RAPID, RA-RNTI, and identifier of the target cell, and optionally SFN.

7. The apparatus of any preceding claim, wherein the apparatus is caused to determine no preamble collision, responsive to not receiving during the collision detection timer is running, the second indication of an RA attempt comprising the same RAPID, RA-RNTI and identifier of the target cell, and optionally SFN as the first indication.

8. The apparatus of claim 7, wherein the apparatus is caused to forward, to a source distributed unit, DU, serving the user equipment associated with the first indication, a msg2 of the CBRA procedure responsive to determining no preamble collision.

9. The apparatus of claim 7, wherein the apparatus is caused to send an indication of no collision, to a source distributed unit, DU, serving the user equipment associated with the first indication, responsive to determining no preamble collision.

10. The apparatus of any preceding claim, wherein the collision detection timer is shorter than a RA timer running in a user equipment or in a source DU.

11. The apparatus of any preceding claim, wherein at least the first indication or the second indication is an indication of a RA attempt related to other purposes than TA acquisition in the LTM procedure.

12. An apparatus comprising
at least one processor; and
at least one memory including executable instructions that, when executed by the at least one processor, cause the apparatus:
to receive a msg1 of contention based random access, CBRA, procedure from a user equipment; and
to determine that the CBRA procedure is related to other purposes than timing advance, TA, acquisition in a Layer1/Layer2 triggered mobility, LTM, procedure responsive to determining a transmission of a msg3 of the CBRA procedure; or to determine that the CBRA procedure is related to TA acquisition in the LTM procedure responsive to determining no transmission of the msg3 of the CBRA procedure.

13. The apparatus of claim 12, wherein the apparatus is caused to send, to a central unit, CU, an indication of a RA attempt related to other purposes than TA acquisition in the LTM procedure responsive to determining that the CBRA procedure is related to other purposes than TA acquisition in the LTM procedure.

14. The apparatus of any one of claims 12-13, wherein the apparatus is caused to send, to the central unit, CU, a msg2 of the CBRA procedure responsive to determining that the CBRA procedure is related to TA acquisition in the LTM procedure.

15. An apparatus comprising
at least one processor; and
at least one memory including executable instructions that, when executed by the at least one processor, cause the apparatus:
to determine validity of a timing advance, TA, acquired for a user equipment in a Layer1/Layer2 triggered mobility procedure; and
to perform one of the following: receive a no collision indication from a central unit, CU, and to responsively determine that the TA is valid; or receive a RA retransmission trigger, from the CU, and to responsively determine that the TA is not valid.
